# EUROPÄISCHE PATENTSCHRIFT

(11) **EP 0 864 289 B1**
(45) Veröffentlichungstag und Bekanntmachung des Hinweises auf die Patenterteilung: **07.08.2002**
(21) Anmeldenummer: 97121888.8
(22) Anmeldetag: 12.12.1997
(51) Int. Cl.: A47L 13/16, D04H 11/08

(54) **Textiles Flächenmaterial für Reinigungszwecke**
Cleaning cloth
Tissu de nettoyage

(30) Priorität: 12.03.1997 DE 19710032
(43) Veröffentlichungstag der Anmeldung: 16.09.1998
(73) Patentinhaber: Carl Freudenberg KG, 69469 Weinheim (DE)
(72) Erfinder: Laun, Heinrich, 86161 Augsburg (DE)

(56) Entgegenhaltungen:
- EP-A- 0 578 107
- EP-A- 0 632 990
- WO-A-90/14039
- DE-C- 19 518 975
- DE-U- 9 301 534
- GB-A- 699 633
- US-A- 3 666 608
- US-A- 5 142 727

## Beschreibung

### Technisches Gebiet

Die Erfindung betrifft ein textiles Flächenmaterial für Reinigungszwecke, aufweisend ein Vlies und über das Vlies erhabenen Strukturierungen. Ein derartiges Flächenmaterial wird als wiederverwendbares Wischtuch zur Feuchtund Trockenreinigung von Flächen verwendet.

### Stand der Technik

Eine Oberflächenstruktur kann man durch Garne oder Zwirne in Schlingenform oder geöffneten Schlingen erzielen, die in ein Grundmaterial ganzflächig oder in Teilflächen eingebracht werden. Derartige Produkte sind für Reinigungszwecke auf dem Markt, wobei vorzugsweise eine einseitige Nutzung vorgesehen ist. Als Basismaterial werden Gewebe oder Gewirke, bevorzugt aus Synthesefasern, verwendet. Dieses Basismaterial ist hinsichtlich des Wasserhaushalts inaktiv.

Aus der WO 90-14039 ist ein textiles Flächenmaterial bekannt, welches aus einem gewebten oder gestrickten Träger mit davon abstehenden Schlingen oder Fasern besteht. Die Schlingen können aus Baumwolle bestehen und sind auf einer Seite des Flächenmaterials in Form von streifenförmigen Strukturierungen angeordnet, wobei die Streifen untereinander beabstandet sind und eine zick-zack-förmige Kontur aufweisen.

Aus der WO 94 23 634 ist ein Wischbezug bekannt, der aus einem textilen Rahmen besteht, der zwei verschiedenartige Reinigungsmaterialien aufnimmt. Hier handelt es sich um einen aus mehreren Bauteilen zusammengebauten Wischbezug mit unterschiedlichen Wischeigenschaften auf beiden Seiten. Aus der GB 699 633 ist ein Teppich bekannt, bei dem Schlingen von beiden Seiten eines Gewebes abstehen, wobei die Schlingen zum Teil auch geöffnet sind. Es entstehen Strukturierungen in Form von zueinander beabstandeten Streifen von geöffneten und geschlossenen Schlingen.

Die Aufgabe der Erfindung besteht darin, ein Flächenmaterial für Reinigungszwecke derart weiterzubilden, daß in einfacher Weise die Verwendbarkeit des Flächenmaterials verbessert wird.

### Darstellung der Erfindung

Gemäß der Erfindung weist das textile Flächenmaterial für Reinigungszwecke ein Vlies und über das Vlies erhabene Strukturierungen auf, wobei die Strukturierungen auf beiden Seiten des Flächenmaterials vorhanden sind und als Teilflächen vorliegen und aus Garn- oder Zwirnschlingen oder geöffneten Schlingen aus Garnen bzw. Zwirnen bestehen, wobei zwischen den Strukturierungen einer Seite ein Abstand eingehalten ist, der mindestens der Ausdehnung der auf der gegenüberliegenden Seite vorhandenen Strukturierungentspricht. Die Garne oder Zwirne bestehen aus Fasern im Titerbereich von 1 dtex bis 6,8 dtex, vorzugsweise 1,3 bis 2,8 dtex und die Zwirne oder Garne enthalten mindestens 40% saugende Fasern, beispielsweise CV oder Baumwolle, ansonsten Synthesefasern, bevorzugt PES, wobei weiterhin Schmelzfasern, bevorzugt aus PP, vorgesehen sind, deren Anteil bei 15% bis 100% der Synthesefasern liegt.

Verwendet man ein Nadelvlies als Basismaterial, vorzugsweise homogen und mit einem Träger verstärkt und bereits thermofixiert, dann hat man ein für den Wasserhaushalt aktives Material mit hoher Wasseraufnahme, sehr gutem Wasserrückhaltevermögen und leichter Wasserabgabe beim Auspressen oder Auswringen. Erstreckt sich die Struktur nur auf Teilflächen und ist die nichtstrukturierte Fläche im Kontakt mit dem zu reinigenden Gegenstand, so wird dadurch die Trocknungsleistung gegenüber den derzeit verwendeten Produkten, die mit der Struktur aus Garnen bzw. Zwirnen reinigen und trocknen müssen, kräftig erhöht, wobei trotzdem eine sehr gute Reinigungskraft erzielt wird. Die verbesserte Trocknungsleistung kann durch den geringeren zurückbleibenden Wasserfilm und sein schnelleres Abtrocknen festgestellt werden. Ein gereinigter Fußboden wird damit wieder schneller begehbar.

Andererseits wird durch die bessere Auswringbarkeit des Reinigungsmediums auf Vliesbasis weniger Wasser aufgebracht.

Produkte mit zweiseitiger Garn- oder Zwirnstruktur auf einem Vlies haben gegenüber solchen auf Gewebe- und Gewirkebasis weitere Vorteile. Durch gezieltes Abquetschen oder Auswringen ist eine gezielte Wasseraufnahme möglich. Dadurch ist auch eine auf den zu reinigenden Gegenstand angepaßte Wasserabgabe möglich. Bei angetrocknetem Schmutz wird man zuerst weniger entwässern, also das Reinigungsmedium zur Schmutzlösung nasser verwenden und anschließend nach kräftiger Entwässerung mit demselben Medium eine gute Trocknung herbeiführen.

Bei Medien auf Gewebe- bzw. Gewirkebasis lassen sich wegen des inaktiven Wasserhaushalts der Basis und der geringeren Entwässerungsmöglichkeit der Garne und Zwirne, die anteilmäßig höher sind als bei Material mit Vliesbasis, keine günstigen Abquetscheffekte erzielen und damit keine so günstigen Trocknungseffekte.

Weiterhin kommt man mit niedereren Strukturen aus und damit mit weniger Garn bzw. Zwirn, weil das aktive Basisvlies, dank der hohen Feinporosität gelösten Schmutz und Wasser aufnimmt und zwar viel besser als die Garne bzw. Zwirne, die bei einer inaktiven Basis für diesen Zweck allein zur Verfügung stehen.

Zudem geben Vliese den Schmutz und das Wasser leichter ab als Garne oder Zwirne, man spricht hier von einem höheren Abquetscheffekt. Schließlich haben Produkte auf Vliesbasis mit niedererer Strukturhöhe wegen der besseren Abquetsch- und Ausreißfestigkeit eine geringere Bodenhaftung als Produkte mit inaktiver Basis und höheren Strukturen und verursachen dadurch bei der Benutzung eine geringere körperliche Anstrengung, was besonders für gewerbliche Nutzer von Bedeutung ist.

Der Anteil von mindesten 40% saugenden Fasern, vorzugsweise CV und/oder Baumwolle in mindestens einer Lage des Vlieses, ist für den Beginn des Wasseraufnahmevorganges von besonderer Bedeutung, wobei die übrigen feintitrigen Fasern ein feinporiges Vlies bilden und durch hohe Kapillarwirkung eine hohe Saugkraft bei gutem Wasserrückhaltevermögen ermöglichen.

Dadurch, daß die Strukturierungen auf beiden Seiten des Flächenmaterials vorhanden sind, wobei die Strukturierungen als Teilflächen vorliegen, ist das textile Flächenmaterial beidseitig gleichartig verwendbar, so daß bei der Verwendung nicht darauf geachtet werden muß, welche Seite zur Anwendung kommt.

Die seitlichen Abstände zwischen den gegenseitigen Strukturen müssen dabei ausreichend sein, um ein Überschneiden der Strukturierung beider Seiten zu vermeiden. Die Strukturen, die auf beiden Seiten eingebracht werden, können dabei auch gleichartig oder sogar identisch sein.

Hierbei sind, bei ausreichendem Abstand, die Strukturen des einen Vlieses in die unstrukturierten Zwischenräume des Gegenvlieses eingepaßt. Bei der Nutzung - z.B. mittels eines Schrubbers kann - dadurch eine Funktionsverstärkung erzielt werden. So kann durch ein verstärktes Anpressen der unstrukturierten Zwischenräume auf dem Boden die Trockenleistung erhöht werden.

Bei beidseitig gleichartig einzusetzenden, bevorzugt homogen aufgebauten Produkten kann durch die Art der Struktur und durch das Verhältnis strukturierter Fläche zu unstrukturierten Flächen die Trocken- und Reinigungsleistung optimiert werden. Man kann so Produkte erzielen, die auf jeder Seite den gleich guten Reinigungs- und Trocknungseffekt bieten.

Durch das Anschmelzen der Schmelzfasern nach Herstellung des strukturierten Vlieses erzielt man nach dem Erkalten Bindepunkte zwischen den übrigen Fasern. Zusätzlich zu dem Vernadeln wird eine weitere Verfestigung des Vlieses erzielt.

Die Schlingenhöhe kann zwischen 3 und 12 mm liegen, bevorzugt liegt sie bei 5 bis 7 mm.

Die Garne oder Zwirne kann man nach dem Tufting- oder dem Malipolverfahren ganzflächig oder in Längsstreifen, die nicht gerade sein müssen, beispielweise Zickzack, in die Vliesbasis in Schlingenform einbringen. Diese Schlingen können mit einer Veloureinrichtung geöffnet werden.

Die Garn- bzw. Zwimschlingen sind durch Tufting - oder Malipolverfahren eingebracht. Beim Tuften wählt man vorzugsweise einen Nadelabstand zwischen 1,4 und 2 mm. Bei einer teilflächigen Strukturierung werden nur die benötigten Nadeln bestückt. Die Stichzahl pro laufende 10 cm liegt etwa zwischen 25 und 42.

Die Schmelzfasern im Garn werden beim Trocknen und Kondensieren der Rückenbeschichtung aktiviert. Dadurch erhält das Garn, bzw. der Zwirn, zusätzliche Festigkeit. Die etwas zunehmende Versteifung fördert die Scheuereigenschaft. Dabei müssen die Schmelzfasern in einem extra Arbeitsgang aktiviert werden.

### Kurzbeschreibung der Zeichnung

In der Zeichnung sind Ausführungsbeispiele der Erfindung dargestellt. Es zeigt die
- Fig. 1: einen Schnitt durch ein textiles Flächenmaterial mit Strukturierungen in Form von zueinander versetzten Teilflächen, die
- Fig. 2: ein textiles Flächenmaterial mit Strukturierungen in Form eines Buchstabenmusters.

### Ausführung der Erfindung

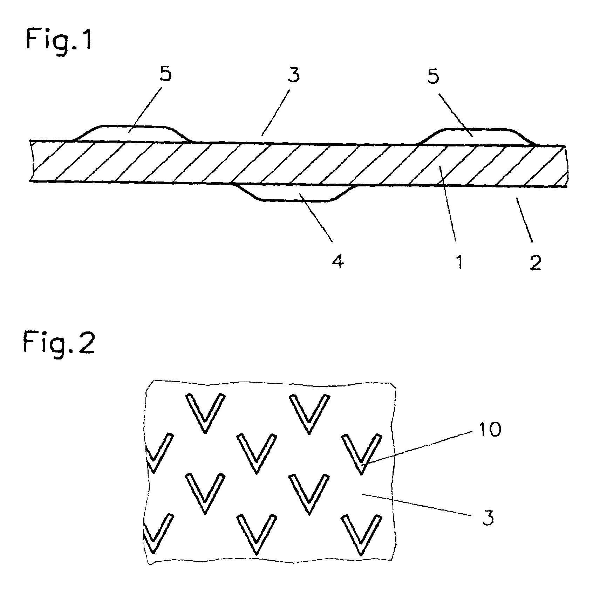

In Fig. 1 ist ein Vlies 1 dargestellt, auf dessen beiden Seiten 2, 3 erhabene Strukturierungen 4, 5 vorgesehen sind. Die Strukturierungen 4, 5 sind als Teilflächen ausgebildet und überlappen sich gegenseitig nicht. Es ist ein Sicherheitsabstand vorgegeben, der um 10 mm größer als das Maß der Strukturierungen auf der Gegenseite ist. Das Vlies 1 kann aus einem thermofixierbaren, vernadelten Vliesmaterial bestehen.

Als Beispiel für eine weitere Strukturierungsmöglichkeit ist in Fig. 2 eine Strukturierung in Form von Buchstaben 10 dargestellt, die sich gegenüber der Oberfläche 3 abheben.

## Patentansprüche

1. Textiles Flächenmaterial für Reinigungszwecke, aufweisend ein Vlies (1) und über das Vlies (1) erhabene Strukturierungen (4, 5), wobei die durch Struckturnadelung entstandene Strukturierungen (4, 5) auf beiden Seiten (2, 3) des Flächenmaterials vorhanden sind und als Teilflächen vorliegen und aus Garn- oder Zwirnschlingen oder geöffneten Schlingen aus Garnen bzw. Zwirnen bestehen, die Vollflächig oder in Streifenform geradlinig oder abweichend, beispielsweise im Zickzack, eingebracht sind, wobei zwischen den Strukturierungen (4, 5) einer Seite (2, 3) ein Abstand eingehalten ist, der mindestens der Ausdehnung der auf der gegenüberliegenden Seite vorhandenen Strukturierung (4, 5) entspricht, **dadurch gekennzeichnet, daß** die Garne oder Zwirne aus Fasern im Titerbereich von 1 dt ex bis 6,8 dt ex, vorzugsweise 1,3 bis 2,8 dt ex, bestehen und daß die Zwirne oder Garne mindestens 40% saugende Fasern, beispielsweise CV oder Baumwolle, ansonsten Synthesefasern, bevorzugt PES, enthalten, wobei weiterhin Schmelzfasern, bevorzugt aus PP, vorgesehen sind, deren Anteil bei 15% bis 100% der Synthesefasern liegt.

2. Textiles Flächenmaterial nach Anspruch 1 **dadurch gekennzeichnet, daß** die Schmelzfasern nach Herstellung des strukturierten Vlieses zumindest angeschmolzen wurden.

3. Textiles Flächenmaterial nach einem der Ansprüche 1 bis 2, **dadurch gekennzeichnet, daß** die Schlingenhöhe bzw. die Höhe der geöffneten Schlinge 3 mm bis 12 mm, bevorzugts 5 bis 7 mm ist.

4. Textiles Flächenmaterial nach einem der Ansprüche 1 bis 3, **dadurch gekennzeichnet, daß** die Garn- bzw. Zwirnschlingen durch die Tuftingoder Malipolverfahren eingebracht sind mit einer Stichzahl von 25 bis 42 Stichen pro 10 laufende Zentimeter.

## Claims

1. A textile sheet material for cleaning purposes, composed of a nonwoven (1) comprising elevated structures (4,5) on both faces (2,3) of the sheet material, the structures (4,5) having been formed by structural needling, being present as part-areas and being composed of yarn or thread loops or opened loops of yarns or threads which have been introduced rectilinearly or deviatingly, for example in a zigzag pattern, over the whole area or in stripes, the structures (4,5) of any one face (2,3) being spaced a distance apart which is at least equal to the size of the structure (4,5) present on the reverse face, **characterized in that** the yarns or threads are composed of fibres in the linear density range from 1 dtex to 6.8 dtex, preferably from 1.3 to 2.8 dtex, and **in that** the threads or yarns comprise at least 40% of absorbent fibres, for example CV or cotton, as well as synthetic fibres, preferably PES, and also fusible fibres, preferably made of PP, whose fraction is from 15% to 100% of the synthetic fibres.

2. A textile sheet material according to claim 1, **characterized in that** the fusible fibres have been at least partially melted after production of the structured nonwoven.

3. A textile sheet material according to either of claims 1 and 2, **characterized in that** the loop height or the height of the opened loop is in the range from 3 mm to 12 mm, preferably from 5 to 7 mm.

4. A textile sheet material according to any of claims 1 to 3, **characterized in that** the yarn or thread loops have been introduced by tufting or Malipol processes using a stitch count of from 25 to 42 stitches per 10 cm of linear centimetre.

## Revendications

1. Matériau textile plat de nettoyage, présentant un feutre (1) et des structurations (4, 5) en saillie par rapport au feutre (1), les structurations (4, 5) obtenues par aiguilletage de structuration étant présentes sur les deux côtés (2, 3) du matériau plat, se présentant sous la forme de parties de surfaces et étant constituées de boucles de fil ou de fil retordu ou de boucles ouvertes de fil resp. de fil retordu qui sont incorporées sur toute la surface ou en bandes rectilignes ou non rectilignes, par exemple en zigzag, un écart qui correspond au moins à l'extension de la structuration (4, 5) prévue sur le côté opposé étant maintenu entre les structurations (4, 5) d'un côté (2, 3), **caractérisé en ce que** les fils ou fils retordus sont constitués de fibres dans une plage de titre de 1 dtex à 5,8 dtex, de préférence de 1,3 à 2,8 dtex, et **en ce que** les fils retordus ou fils contiennent au moins 46 % de fibres absorbantes, par exemple en CV ou en coton, et étant pour le reste constitués de fibres de synthèse, de préférence en PES, présentant en outre des fibres fusibles, de préférence en PP représentant dans une proportion de 15 % à 100 % des fibres de synthèse.

2. Matériau textile plat selon la revendication 1, **caractérisé en ce que** les fibres fusibles sont appliquées au moins par fusion après fabrication du feutre structuré.

3. Matériau textile plat selon l'une des revendications 1 à 2, **caractérisé en ce que** la hauteur des boucles resp. la hauteur des boucles ouvertes est de 3 mm à 12 mm, de préférence de 5 à 7 mm.

4. Matériau textile plat selon l'une des revendications 1 à 3, **caractérisé en ce que** les boucles de fil resp. les fils retordus sont insérés par un procédé de tuftage ou "Malipol", à une densité de piqûres de 25 à 42 piqûres pour 10 cm courants.
